# EUROPEAN PATENT SPECIFICATION

(11) **EP 0 550 701 B1**
(45) Date of publication and mention of the grant of the patent: **16.10.1996**
(21) Application number: 92904299.2
(22) Date of filing: 06.02.1992
(51) Int. Cl.: B60C 23/04

(54) **AN INDICATOR OF THE ABNORMAL AND NORMAL PNEUMATIC TYRE PRESSURE DURING THE DRIVING OR STOPPING OF A VEHICLE**
ANZEIGEGERÄT FÜR DEN ABNORMALEN UND NORMALEN REIFENDRUCK WÄHREND DES FAHRENS ODER DES ANHALTENS EINES FAHRZEUGES
INDICATEUR DE LA PRESSION ANORMALE ET NORMALE D'UN PNEU PENDANT LA CONDUITE OU L'ARRET D'UN VEHICULE

(30) Priority: 08.02.1991 GR 10100069
(43) Date of publication of application: 14.07.1993
(73) Proprietor: TSAGAS, Nikolaos, Prof., GR-671 00 Xanthi (GR)
(72) Inventor: TSAGAS, Nikolaos, Prof., GR-671 00 Xanthi (GR)
(74) Representative: Andrikopoulou, Evagelia
(86) International application number: GR9200001
(87) International publication number: WO9213730

(56) References cited:
- EP-A- 0 087 138
- EP-A- 0 345 199
- GB-A- 2 122 757
- US-A- 3 249 916
- US-A- 4 283 707

## Description

### BACKGROUND OF THE INVENTION

### Field of the Invention

The present invention relates to an apparatus for indicating to the driver of a vehicle the air pressure in the pneumatic tyres of the vehicle.

### Description of the Prior Art

It is generally known that many road accidents are caused by tyres being over-inflated or under-inflated. Over-inflated tyres are the result of their overheating, being due either to excessive friction developing in the wheel assembly or to high vehicle speeds or to maintenance being made without due care. On the other hand, under-inflated tyres are due to accidental puncturing, which is more likely with worn or low quality tyres.

Unusual air pressure conditions in the tyres, i.e. over or under-inflated tyres, are dangerous and could be avoided by an automatic tyre air pressure indicator which can operate as a road safety device. Furthermore, tyres with proper air pressure could offer saving in tyre cost, convenience, fuel economy and confidence for the drivers of motor vehicles and specially for those of long vehicles with twin tyres.

Various devices have been developed in the prior art to detect and timely indicate to the driver of the vehicle, faulty air pressure in anyone of its tyres. Basically the following principles of operation are used in those prior art devices:
a) The current collector method, wherein an air pressure gauge is mounted onto the rotating tyre and an indicator at a non-rotating part of the vehicle, a current collector ring being used to connect the pressure gauge and indicator, where the current collector ring is fixed at the axle and a collector brush is fixed at the non-rotating part of the wheel assembly.
b) The wireless method, wherein the tyre rim is provided with wireless frequency transmitter and transmitting antenna, whereas a receiving antenna and receiver are provided at the non-rotating part of the wheel assembly.
c) Various resonance circuit tyre pressure detecting systems have also been developed in the prior art. A conventional resonance circuit system has been that wherein a detecting switch, an antenna and a circuit with inductance and capacitance is mounted onto the rotating tyre and a transmitter and receiver at the non-rotating part of the vehicle wherein an intermittent retransmission of the abovementioned circuit occurs in response to the variations in tyre air pressure, this retransmission being of the same frequency as the resonance frequency of the circuit.

Various disadvantages are associated with the aforementioned methods of the prior art, which have therefore not found broad application. The current collector ring method requires a sliding contact, wherein degradation of performance and lack of reliability tends to occur, sooner or later, caused by imperfect contact due to wear of the members, dust and mud. Further, the wireless method has a complicated structure necessitating mounting onto the rotating tyre of a power source, e.g. battery, for the transmitter, which also makes the device unreliable and needs employment of severe maintenance standards.

Finally, the third conventional resonance circuit method also employs a complicated mechanism and tends to exhibit deviations in resonance, which also make the system unreliable. Tsagas EP-A-O 345 199 disclosed an indicator of the air pressure in the tyres of a vehicle, which utilised a pair of metallic annular strips, one strip being mounted on the rotating tyre portion, and the other strip being mounted at a non-rotating part of the wheel assembly, a capacitive coupling occuring between these two strips, as a response to activating a tyre pressure gauge detecting deviations from the predetermined normal tyre pressure.

A disadvantage in the above Tsagas EP-A-O 345 199 system was that the tyres had to be made with a special recession, whithin which fitted the abovementioned metallic annular strip, which was mounted at the rotating tyre. Therefore application of this tyre pressure detecting system was limited to tyres of a particular design.

Another disadvantage in the above Tsagas EP-A-O 345 199 system was that activation of the electronic circuit used to warn the driver of deviations from normal in the pressure of his tyres, necessitated passage of electric current through the ball-bearing of the wheel shaft, wherein unpredictable cut-off of the warning signal occured due to the ball bearing lubricant.

Another disadvantage in the above, was that both the abovementioned metallic annular strips were exposed to rain water, mud, dust, etc, thereby resulting to undesired changes in the capacitive coupling in between them.

### SUMMARY OF THE INVENTION

A first object of the present invention is to provide an indicator of the air pressure in the pneumatic tyres of a vehicle, which eliminates all the abovementioned disadvantages of the prior art and introduces an indicator with optimum reliability and accuracy, which does not require any frequent or special maintenance, has a long service life and competative cost.

A second object of the present invention is to provide the indicator of the air pressure in the pneumatic 0 tyres of a vehicle, with a special design, dimensions and positioning within the wheel assembly so as to eliminate parasitic currents and obtain optimum efficiency in operation.

A third object of the present invention is to provide alternative designs for the indicator of the air pressure in the pneumatic tyres of a vehicle, so that it may fit within the inner surface of the drum or disk brake of the wheel assembly, depending on whether a drum or disk brake system is used in the vehicle, such fitting of the proposed indicator offering protection to the same from rain water, mud, dust, etc.

Still, a further object of the invention is to propose, in association with the proposed indicator of the air pressure in the pneumatic tyres of a vehicle, various alternative advantageous designs of the tyre pressure gauge which is fitted onto the rotating tyre.

The abovementioned objects of the present invention are realised in accordance to a first preferred embodiment of the invention with an indicator of the air pressure in the pneumatic tyres of a vehicle, comprising: four metallic annular strips forming two air capacitors, the two air capacitors being electrically connected by means of a tyre pressure gauge, the pressure gauge operating as an ON-OFF switch which can activate an electronic circuit and light a corresponding to the tyre with faulty pressure visual means, such as a LED, wherein the electronic circuit comprises a high frequency oscillator and a frequency divider unit, an amplifier and a set of tuned filters unit, one LED for each one of the wheels of the vehicle, a half wave rectifier, voltage comparator and monostable multivibrator unit and a single polarity D.C. power supply to a symmetrical polarity D.C power supply converter.

Other embodiments of the invention are presented in the detailed description hereinafter.

### BRIEF DESCRIPTION OF THE DRAWINGS

These and other objects and novel features of this invention will become apparent to those skilled in the art 0 from the following detailed description by reference to the accompanying drawings.

Fig.1 shows a cross sectional view of a vehicle's wheel assembly within which is mounted the mechanical part of the proposed indicator in accordance to a first preferred embodiment, comprising two pairs of metallic strips. Also shown is a block diagram of the electronic circuit of the proposed indicator.

Fig.2 shows a cross sectional view of a vehicle's wheel assembly within which is mounted the mechanical part of the proposed indicator in accordance to a second preferred embodiment, again comprising two pairs of metallic strips, but in different location and orientation from that of Fig.1. The associated block diagram of the electronic circuit is the same as that of Fig.1.

Fig.3 shows a block diagram of the electronic circuit associated with the proposed indicator of Figs 1 and 2.

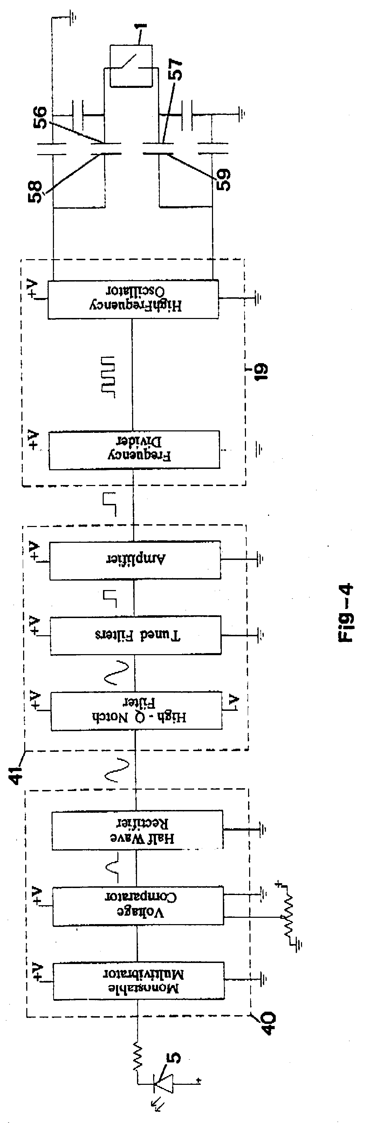

Fig.4 is a more detailed block diagram of the electronic circuit of Fig.3.

Fig.5 shows a cross sectional view of a vehicle's wheel assembly, within which is mounted the mechanical part of the proposed indicator in accordance to a third preferred embodiment, comprising a rotating metallic annular strip and a stationary electrode pin. Also shown is a block diagram of the electronic circuit of this indicator.

Fig.6 shows a cross sectional view of a vehicle's wheel assembly within which is mounted the mechanical part of the proposed indicator in accordance to a fourth preferred embodiment, again comprising a rotating metallic strip and a stationary electrode pin, but in different location and orientation from that of Fig.5. The associated block diagram of the electronic circuit is the same as that of Fig.5.

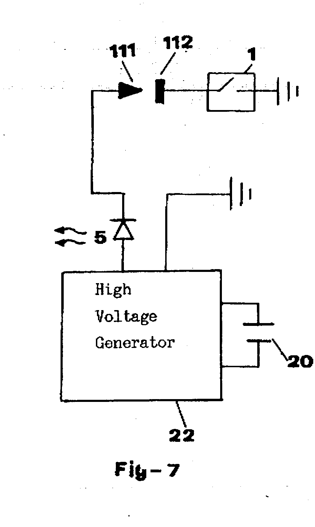

Fig 7 shows a block diagram of the electronic circuit associated with the proposed indicator of Figs 5 and 6.

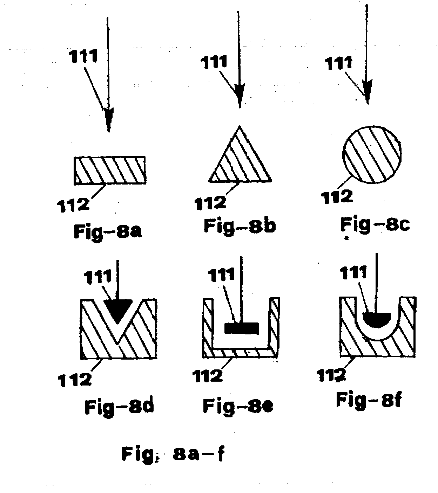

Figs. 8a-8f show various forms of the pair of rotating metallic annular strip and stationary electrode pin, referred to in previous Figs 5 and 6.

Figs 9a-9c show cross sectional views of various alternative forms of the pressure gauge used in the proposed indicator.

Figs. 10a and 10b illustrate a further alternative view of a pressure gauge that can be used in association with the proposed indicator of the invention.

### DETAILED DESCRIPTION OF PREFERRED EMBODIMENTS

The detailed description of preferred embodiments and drawings hereinafter being made by reference to the accompanying drawings does not intend to limit the scope of the invention and it will be readily understood by one skilled in the art that the present invention is not anticipated by the prior art.

The proposed indicator of the air pressure in the pneumatic tyres of a vehicle, in accordance to the present invention, employs for each one of the wheels of the vehicle, a pair of air capacitors connected to a pressure gauge mounted onto the wheel and an electronic circuit connected to the abovementioned pair of air capacitors, wherein when the air pressure in any one of the tyres of the vechicle deviates from a normal predetermined value, the pressure gauge electrically connects two of the capacitor's plates, having the form of metallic strips and being mounted onto the rotating part of the wheel assembly, thereby effecting an enhanced capacitive coupling between the abovementioned two air capacitors, resulting to the activation of the abovementioned electronic circuit, by means of which a visual or sonar indication is given to the driver of the vehicle to warn him of the deviation from normal of the air pressure in one of his vehicle's tyres.

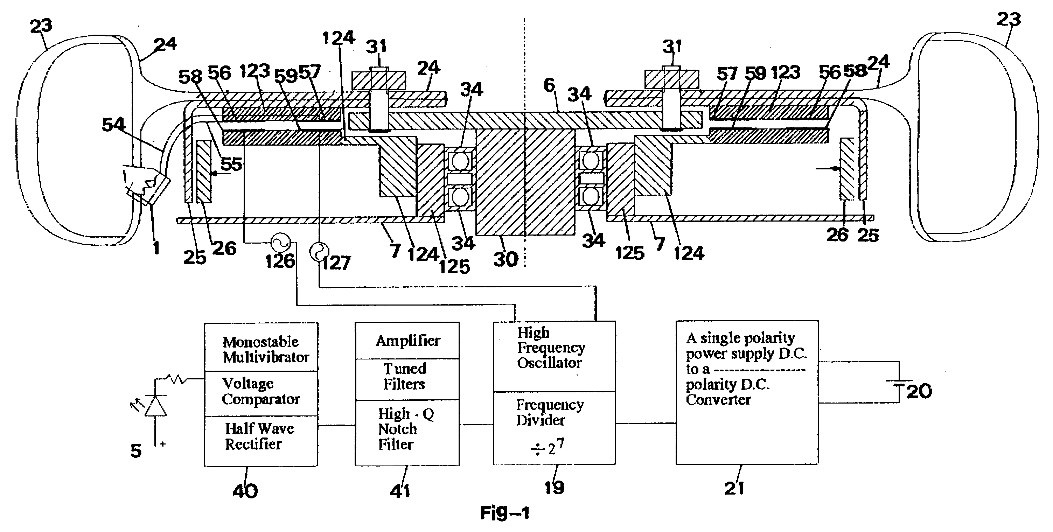

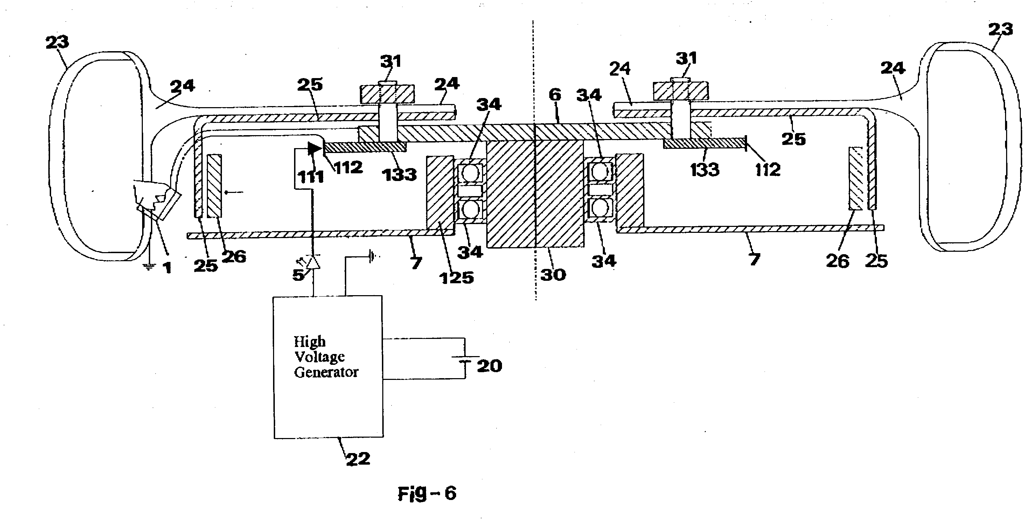

Referring to any one of the accompanying Figs 1, 2, 5 or 6 a wheel assembly is shown to include a central rotating wheel shaft 30, its rotation taking place within a ball bearing 34 fixed within the cylindrical housing 125. Wheel shaft 30 is connected to a solid circular disk 6, upon which is mounted the brake drum 25 and the wheels' metallic rim 24, fixed thereupon by means of bolt and nut assemblies 31. The wheel assembly is shown to extend to the inflatable tyre 23 and being internally protected by a metallic annular protection cap 7. Also shown in close contact with the periphery of the brake drum 25 is the brake pad 26. An insulating layer 123 is used for mounting the hereinbelow described rotating metallic strips of the invention onto the interior surface of brake drum 25. Also a supporting base 124 is fixed onto the non-rotating cylindrical housing 125, extending into an insulating basement onto which are mounted the hereinbelow described non-rotating metallic strips of the invention.

A pressure gauge 1 is shown placed at the wheel's rim 24 so as to communicate with the interior of the pneumatic tyre 23.

In accordance to a first preferred embodiment of the invention, depicted in Fig. 1, for each one of the wheels of the vehicle there are four metallic annular strips, a first metallic annular strip 56, a second metallic annular strip 57, a third metallic annular strip 58 and a fourth metallic annular strip 59, where the first pair of first and second metallic annular strips 56, 57 is shown being supported by the insulating layer 123 and the second pair of third and fourth metallic annular strips 58, 59 is shown being supported by the insulating base 124. The first and second metallic annular strips 56, 57 are rotating concentric, whilst the third and fourth metallic annular strips 58, 59 are concentric non-rotating. Two plane air capacitors 56, 58 and 57, 59 are thereby formed. The insulating layers 123 and 124 must be of low dielectric constant and a maximum allowed thickness. A pair of cables 55 and 54 from the pressure gauge 1 are connected to first and second metallic annular strips 56 and 57 respectively. The non-rotating third and fourth metallic annular strips 58 and 59 are connected to the electronic circuit of the invention, which is an integrated circuit, placed upon the non-rotating part of the wheel assembly.

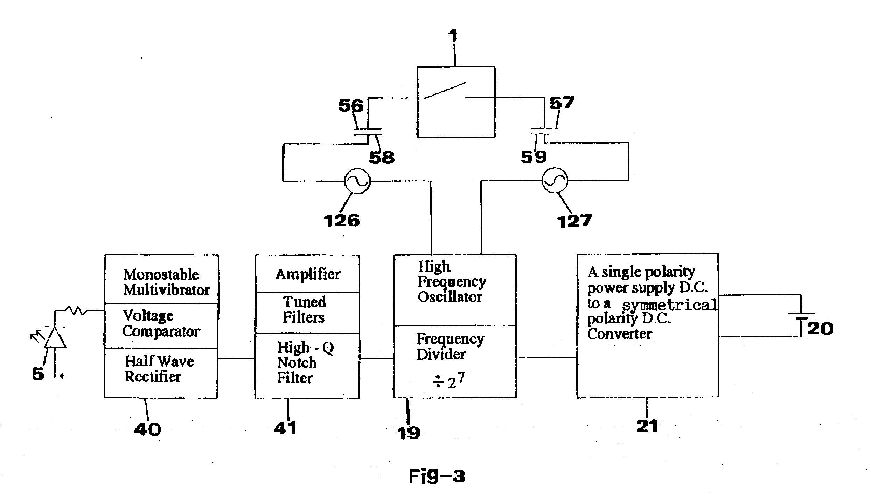

As shown in accompanying Fig.3, the electronic circuit of the invention for each one of the wheels of the vehicle comprises a high frequency oscillator and frequency divider unit 19, an amplifier and filtering unit 41, and a half wave rectifier, voltage comparator and monostable multivibrator unit 40. The electronic circuit and specifically the high frequency oscillator and frequency divider unit 19 is supplied with power from the electric D.C battery 20 of the vehicle, through a single polarity D.C. power supply to a symmetrical polarity D.C. power supply converter 21.

The electronic circuit is eventually connected via suitable cables to the third and fourth metallic annular strips 58 and 59. It is preferred to employ high frequency sinusoidal signals 126, 127 to reduce parasitic capacitive coupling due to the adjacent metallic parts of the wheel assembly. Eventually a LED 5 for each one of the wheels of the vehicle used to give to the vehicle's driver the warning of deviations from normal in the tyre pressure, is shown connected to this electronic circuit.

The capacitance of capacitors 56-58 and 57-59 can obtain two different values, depending on whether the pressure gauge 1 is open or closed. The assembly of the first, second, third and fourth metallic annular strips 56, 57, 58, 59 is used as a timing capacitor, in a high frequency oscillator to produce two frequency ranges.

The first frequency range is produced to correspond to the ON position of the tyre pressure gauge 1 and the second frequency range is produced to correspond to OFF position of the same tyre pressure gauge 1.

The high frequency oscillator and a frequency divider unit 19 is used as a means of producing a square train pulse which can pass through an arrangement 41 comprising an amplifier and a set of tuned filters, including a high-Q notch filter, which permits the fundamental frequency of the train pulse to pass in order to convert the square train pulse to a sinusoidal signal.

The filters are designed in such a way so that one of the two abovementioned frequency ranges falls in the gap of the notch filter while the second frequency range falls outside. The result in the output of the filter is that a necessary distinction between the two frequencies takes place since the first frequency which falls in the gap, passes with very high attenuation.

The next unit 40 is a half wave rectifier, a voltage comparator and a monostable multivibrator in which the rectifier converts the sinusoidal signal to the D.C level. The comparator provides an output of square train pulse whenever the input signal falls below a certain level determined by a trimmer and the monostable multivibrator increases the amplitude of the square train pulse of the voltage comparator output.

This monostable multivibrator is implemented by using a proper timing circuit and its output drives an indicating LED, corresponding to a tyre with faulty air pressure.

The operation efficiency of the indicator of the air pressure in the pneumatic tyres of a vehicle in accordance to the above embodiment is improved when:
- a thin layer of dielectric material of high dielectric constant is inserted within the air capacitors 56, 58 and 57, 59;
- the facing surfaces of the metallic annular strips of the air capacitors 56, 58 and 57, 59 are coated with a paste of high dielectric constant mixed with an epoxy resin;
- the separation coupling distance between capacitor 56, 58 and 57, 59 is selected to be a minimum distance;
- the area of each one of the first, second, third and fourth metallic annular strips 56, 57, 58, 59 is selected to be approximately the maximum allowed by the dimensions of the brake drum;
- one independent integrated electronic circuit with a single LED is used in each one of the wheels of the vehicle;

Furthermore, the operation efficiency of the proposed indicator is adversely effected by a parasitic capacitive coupling occuring between the first and second metallic annular strips 56, 57,the third and fourth metallic annular strips 58, 59, the second and third metallic annular strips 57, 58, the first and fourth metallic annular strips 56, 59 and between the first, second, third and fourth metallic annular strips 56, 57, 58, 59 and adjacent metallic parts of the vehicle. In accordance to the invention this parasitic capacitive coupling is minimized when:
the metallic strips 56,57,58,59 are fixed in the minimum possible distance from the adjacent metallic parts of the wheel assembly;
a minimum spacing between the concentric annular metallic strips 56, 57 and between the concentric annular metallic strips 58, 59 is selected;
   - each one of the insulating layer 123 and the insulating base 124 have a low dielectric constant and a sufficient thickness so that the first, second, third and fourth metallic annular strips 56, 57, 58, 59 are in a maximum allowed distance from the adjacent metallic parts of the wheel assembly;

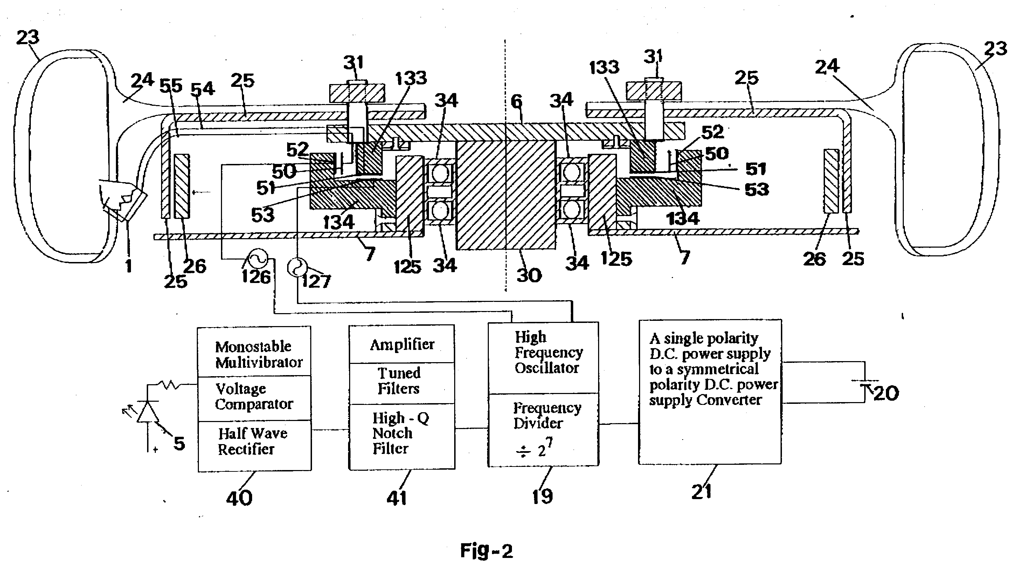

In accordance to a second preferred embodiment of the invention, depicted in Fig. 2 the indicator of the air pressure in the pneumatic tyre of the vehicle comprises, for each one of the wheels of the vehicle, four metallic strips, a first metallic strip 50, a second metallic strip 51, a third metallic strip 52 and a fourth metallic strip 53, wherein the first pair of the first and second metallic strips 50, 51 being mounted onto an insulating layer 133 and the second pair of the third and fourth metallic strips 52, 53 being mounted onto an insulated base 134. The first and second metallic strips 50 and 51 are rotating whilst the third and fourth metallic strips 52 and 53 are non-rotating. A first plane air capacitor 51, 53 is formed between the second and fourth metallic strips 51 and 53, wherein each of the second and fourth metallic strips 51, 53 is of plane annular construction and disposed in an orientation normal to the central rotating wheel shaft 30. A second cylindrical air capacitor 50, 52 is formed between the first and third metallic strips 50 and 52 wherein each of the metallic strips 50, 52 is of cylindrical construction and disposed in an orientation such that its central axis is parallel to the central rotating wheel shaft 30. The indicator further comprises an electronic circuit and a tyre pressure gauge. The electronic circuit includes a high frequency oscillator and a frequency divider unit 19, an amplifier and a set of tuned filters unit 41 and a unit 40 including a half wave rectifier, a voltage comparator and a monostable multivibrator. A square train pulse is produced by the unit 19, which can pass through the tuned filters, these tuned filters include a high-Q notch filter which permits the fundamental frequency of the train pulse to pass in order to convert the square train pulse to a sinusoidal signal. The half wave rectifier converts the sinusoidal signal to a D.C. level and the voltage comparator gives an output of a square train pulse whenever an input signal to the voltage comparator falls below a certain level. The monostable multivibrator increases the amplitude of the square train pulse of voltage comparator output. The tyre pressure gauge 1 connects electrically as an ON-OFF switch the first and second metallic strips 50, 51 of the pair of air capacitors 50-52 and 51-53, wherein the pair of first and second air capacitors 51-53 and 50-52 is adapted so as to operate as a timing capacitor in the oscillator 19. Thus a first frequency range is produced to correspond to the ON position of the tyre pressure gauge 1 and the second frequency range is produced to correspond to the OFF position of the tyre pressure gauge 1.

The filters are designed in such a way so that the first frequency range falls within a gap of the notch filter and passes with very high attenuation, while the second frequency range falls outside the gap of the notch filter. The half wave rectifier converts the sinusoidal signal to the D.C. level. The voltage comparator provides the square train pulse output whenever the input signal to the voltage comparator falls below a certain level determined by a trimmer and the monostable multivibrator increases the amplitude of the square train pulse of the voltage comparator output by using a proper timing circuit and the output of the monostable multivibrator drives one of the LEDs 5 corresponding to a tyre faulty air pressure. The insulating layer 133 is also mounted onto a disk brake of a wheel assembly of the vehicle.

The operation efficiency of the indicator of the air pressure in the pneumatic tyres of a vehicle in accordance to above embodiment of the invention is improved when:
- a thin layer of dielectric material of high dielectric constant is inserted within the first and second air capacitors 51, 53 and 50, 52;
- the facing surfaces of the first, second, third and fourth metallic strips 50, 51, 52, 53 of the first and second air capacitors 51-53 and 50-52 are coated with a paste of high dielectric constant mixed with an epoxy resin;
- the area of each one of the first, second, third and fourth metallic strips 50, 51, 52, 53 is selected to be the maximum allowed by the dimensions of the brake drum or brake disk, whichever is used in the particular vehicle;
- one independent integrated electronic circuit with a single LED 5 is used in each one of the wheels of the vehicle.

Furthermore, the operation efficiency of the proposed indicator is adversely effected by a parasitic capacitive coupling occuring between the first and second metallic strips 50, 51, the third and fourth metallic strips 52, 53, the second and third metallic strips 51, 52, the first and fourth metallic strips 50, 53 and between the first, second, third and fourth metallic strips 50, 51, 52, 53 and adjacent metallic parts of the vehicle. In accordance to the invention this parasitic capacitive coupling is minimized when:
the metallic strips 50, 51, 52, 53 are fixed in the minimum possible distance from the adjacent metallic parts of the wheel assembly;
a minimum spacing between the metallic strips 50, 51 and between the metallic strips 52, 53 is selected;
each one of the insulating layer 133 and the insulating base 134 have a low dielectric constant and a thickness selected to be the maximum allowed by the dimensions of the brake drum or brake disk, whichever is used in the particular vehicle;
high frequency sinusoidal signal 126, 127 are applied to the non-rotating third and fourth metallic strips 52, 53 so that the surrounding metallic frame of the wheel assembly does not follow the fast changes of high frequency oscillation;
the cables connecting the integrated electronic circuit to each one of the LEDs are coated with thick insulating material of low dielectric constant;.

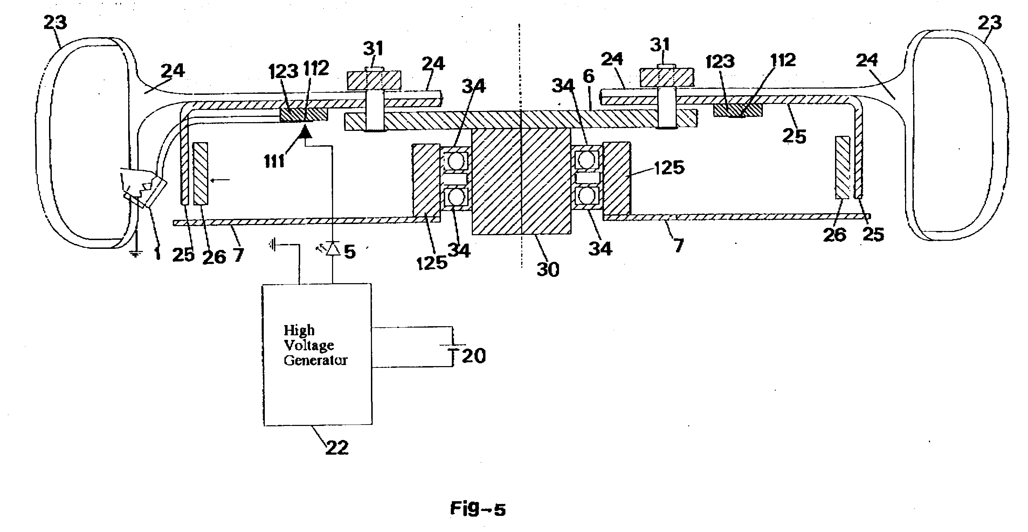

In accordance to a third preffered embodiment of the invention, depicted in Fig 5, the indicator of the air pressure in the pneumatic tyre of the vehicle comprises a non-rotating infusible electrode pin 111, mounted onto a non-rotatingpart of the wheel assembly and rotating metallic annular electrode 112 mounted onto an insulated layer 123 on the inner surface ofa drum brake of each of the vehicle's wheels. The indicator further comprises an electric circuit which includes a tyre pressure gauge 1 to electrically connect the metallic annular electrode 112 with the rotating metallic wheel rim and a high voltage gene r ato r 22 applying a high voltage between the non-rotating electrode pin 111 and the rotating metallic annular electrode 112 and a system of LEDs 5, one LED for each one of the wheels of the vehicle. The tyre pressure gauge 1 operates as an ON-OFF switch and electric current flows in the electric circuit in response to an ON position of the tyre pressure gauge 1 caused by a deviation of a tyre air pressure from a normal predetermined value. An electric discharge occuring between the non-rotating electrode pin 111 and the rotating metallic annular electrode 112 results to a spark discharge coupling of the electrode pin 111 and the metallic annular electrode 112. The electric current eventually drives one of the LEDs 5 corresponding to a tyre with faulty air pressure.

The operation efficiency of the indicator of the air pressure in the pneumatic tyres of a vehicle in accordance to the above embodiment of the invention is improved when:
- the metallic annular electrode 112 is coated with amaterial having a secondary electron emission coefficient of high value;
- the non-rotating electrode pin 111 is coated withasmall quantity of a b-ray radioisotope;
- the high voltage applied between the electrode pin 111 and the metallic annular electrode 112 is A.C. of high frequency;
- thick insulating layers are used for mounting the electrode pin 111 and the metallic annular electrode 112 onto the wheel assembly, thereby minimizing parasitic currents occuring between the electrode pin 111 or the metallic annular electrode 112 and adjacent metallic surfaces of the wheel assembly;

In accordance to the invention, a plurality of novel designs is proposed for the tyre pressure gauge used in either one of the above mentioned embodiments.

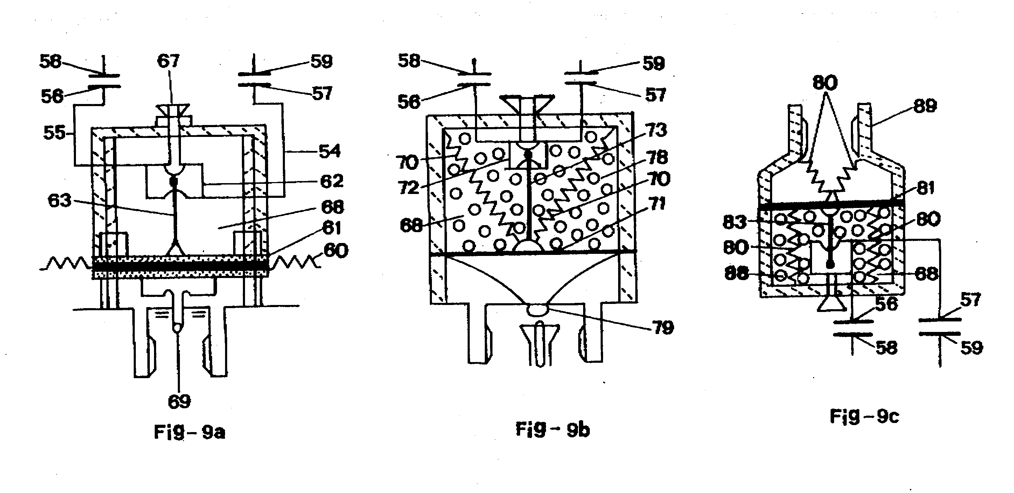

In accordance to a first preferred embodiment of the invention the tyre pressure gauge 1 depicted in Fig. 9a comprises a pair of durable rubber layers 61 which have a certain thickness and contain in between them in a sandwitch a thin curved zig-zag steel wire 60, these layers 61 enclosing air tightly a chamber 68. The chamber 68 communicates through a tube 69 with the interior of the tyre, wherein a sensitive ON-OFF microswitch 62 is electrically connected to the first and second metallic annular strips 56, 57. An electrode 63 is fastened at the middle of the rubber layer 61 and this electrode 63 is connected with the steel wire 60. A regulating screw 67 extends vertically upwards the electrode 63, by means of which the position of the microswitch 62 can be adjusted as desired.

In accordance to a second preferred embodiment of the invention the tyre pressure gauge 1 in Fig. 9b further comprises a plurality of small elastic rubber balls and foamy material 78 with elastic properties filling the chamber 68, soft springs 70 being diagonally disposed within the chamber 68 so as to enhance elasticity of the foamy material and the small elastic rubber balls 78.

In accordance to a third preferred embodiment of the invention the tyre pressure gauge 1 depicted in Fig. 9c comprises a compressed gas filling a portion 88 of said chamber 68, where portion 88 of the chamber 68 is closed on the top by a rubber layer 81. The rubber layer 81 is held in position by a pair of extending springs 80 being fixed to the walls of the tyre pressure gauge 1.

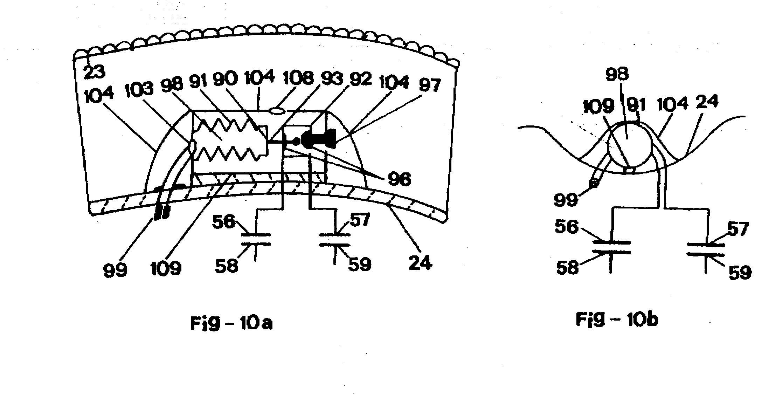

In accordance to a fourth preferred embodiment of the invention the tyre pressure gauge 1 of Figs 10a and 10b is disposed onto an air inlet valve 99. The air inlet valve 99 is fixed internally onto the metallic rim 24 of the wheel assembly. The tyre pressure gauge 1 comprises a small chamber 98, which is defined by a pair of folding walls 91, and a pair of basement walls 90 and 103. An electrode 93 has one end thereof fixedly mounted onto the movable basement wall 90 and the other end free to move in between a pair contact points of a microswitch in response to variations in air pressure in the pneumatic tyre of the vehicle. The base 109 is fixedly mounted on the internal side of the wheel's rim 24 and the interior of the tyre 23 communicates with the interior of the box 104, 109 through the opening 108 of the wall 104. The chamber 98 is filled up by a heavy gas with a pressure equivalent to the normal tyre pressure and alternatively by air through the inlet valve 99. The inlet valve 99 is fixed on the wall 103 and projects outwards the rim 24. The tyre pressure gauge 1 of Figs 10a and 10b is disposed onto the air inlet valve 99, but can be also fixed onto the external side of the wheel's assembly. The air inlet valve 99 is used for calibration purposes, instead of screw 97, to adjust the correct position of electrode edge 93 in between the contact points 96. Provided the air pressure in the tyre is normal, then pressurized air is admitted in the chamber 98 up to the electrode edge 93, which subsequently moves away from the contact points 96 and reaches the middle point of the distance between the contact points 96. The average value of the two air pressures in the chamber 98 when the LED 5 turns ON-OFF-ON gives an indication of the correct position of the electrode edge 93.

All types of the abovementioned illustrative embodiments of pressure gauge sensors are disposed on air inlet valves which are fixed either externally on the metallic rim of the wheel's assembly or they can be also disposed on the internal side of the metallic rim 24.

The additional weight of the pressure gauge, disposed on the rim, causes centrifugal forces which can be avoided by locating the pressure gauge in a small box close to the center of the rim 24. The pressure gauge communicates with the interior of the tyre chamber through a thin flexible tube with durable walls.

Materials with ohmic resistance varying in accordance to the applied air pressure could be used as the base for making pressure gauge sensors.

Finally a common electronic circuit, with a plurality of LEDs 5 corresponding to the number of the wheels of the vehicle, can be used for all the wheels of the vehicle.

## Claims

1. An indicator of the air pressure in the pneumatic tyres of a vehicle, comprising for each one of the wheels of the vehicle a tyre pressure gauge (1) operating in an ON-OFF switch mode and monitoring change in the tyre pressure from normal to abnormal, a system of metallic strips forming a capacitor, said system of metallic strips connected to said tyre pressure gauge (1) and to an electronic circuit, said electronic circuit including and activating an indicating means of warning the driver of the vehicle about a tyre with abnormal pressure, said indicator of the air pressure in the pneumatic tyres of the vehicle being **characterised** by that
said system of metallic strips comprises a first metallic annular strip (56), a second metallic annular strip (57), a third metallic annular strip (58) and a fourth metallic annular strip (59), a first pair of said first and second metallic annular strips (56, 57) being concentrically mounted onto an insulating layer (123) fixed onto the inner surface of a brake drum of each of the vehicle's wheels and a second pair of said third and fourth metallic annular strips (58,59) being concentrically mounted onto a non-rotating insulated base (124) fixed at a nonrotating part of said vehicle, a pair of air capacitors (56-58) and (57-59) being formed between said first pair of first and second metallic annular strips (56,57), and said second pair of third and fourth metallic annular strips (58,59);
said electronic circuit includes a high frequency oscillator and a frequency divider unit (19) to produce a square train pulse, an amplifier and a set of tuned filters unit (41) including a high-Q notch filter permitting the fundamental frequency of said square train pulse to pass in order to convert said square train pulse to a sinusoidal signal, a system of LEDs (5), one LED for each one of the wheels of the vehicle, said LEDs (5) constituting said indicating means of warning the driver of the vehicle about a tyre with abnormal pressure, a unit (40) including a half wave rectifier converting said sinusoidal signal to a D.C. level, a voltage comparator giving an output of a square train pulse whenever an input signal to said voltage comparator falls below a certain level and a monostable multivibrator increasing the amplitude of the square train pulse of said voltage comparator output, a single polarity D.C. power supply to a symmetrical polarity D.C. power supply converter (21), said tyre pressure gauge (1) electrically connecting as an ON-OFF switch said first pair of first and second metallic annular strips (56, 57), said pair of air capacitors (56-58) and (57-59) being adapted to operate as a timing capacitor in said oscillator circuit (19), wherein a first frequency range is produced to correspond to said ON position of said tyre pressure gauge (1) and a second frequency range is produced to correspond to said OFF position of said tyre pressure gauge (1), wherein said first frequency range falls within a gap of said high-Q notch filter of said amplifier and said set of tuned filters unit (41) and passes with very high attenuation, whilst said second frequency range falls outside the gap of said high-Q notch filter and wherein said half wave rectifier converts the sinusoidal signal to the D.C. level, said voltage comparator providing said square train pulse output whenever the input signal to said voltage comparator falls below a certain level determined by a trimmer and said monostable multivibrator increasing the amplitude of the square train pulse of said voltage comparator output by using a timing circuit, an output of said monostable multivibrator driving one of said LEDs (5), ) corresponding to a tyre with abnormal air pressure.

2. The indicator of the air pressure in the pneumatic tyres of a vehicle, as claimed in claim 1, **characterised** by that the operation efficiency of said indicator is improved when:
- a thin layer of dielectric material of high dielectric constant is inserted within said air capacitors (56-58) and (57-59);
- the surfaces of said first, second, third and fourth metallic annular strips of said air capacitors that face each other (56-58) and (57-59) are coated with a paste of high dielectric constant mixed with an epoxy resin;
- the separation coupling distance between said first and third metallic annular strips (56,58) of said air capacitor (56-58) and said second and fourth metallic annular strips (57,59) of said air capacitor (57-59) is selected to be a minimum distance;
- the area of each one of said first, second, third and fourth metallic annular strips (56, 57, 58, 59) is selected to be the maximum allowed by the dimensions of said brake drum;
- a parasitic capacitive coupling occurring between said first and second metallic annular strips (56, 57), said third and fourth metallic annular strips (58, 59), said second and third metallic annular strips (57, 58), said first and fourth metallic annular strips (56, 59) and between said first, second, third and fourth metallic annular strips (56, 57, 58, 59) and adjacent metallic parts of the vehicle is minimized, minimization of said parasitic capacitive coupling being effected when:
said first, second, third and fourth metallic annular strips (56, 57, 58, 59) are fixed at a maximum allowed distance which is selected to be the maximum from adjacent metallic surfaces of said wheel assembly, allowed by the dimensions of said brake drum;
said first, second, third and fourth metallic annular strips (56, 57, 58, 59) are fixed at the minimum possible distance from adjacent metallic parts of said wheel assembly;
a minimum spacing between said first and second concentric metallic annular strips (56, 57) and between said third and fourth concentric metallic annular strips (58, 59) is selected;
each one of said insulating layer (123) and said insulated base (124) have a low dielectric constant and a thickness which is selected to be the maximum allowed by the dimensions of said wheel assembly;
a minimum thickness of each one of said insulating layer (123) and said insulating base (124) is selected so that said first, second third and fourth metallic annular strips (56, 57, 58, 59) are disposed at a maximum distance from the adjacent metallic parts of the wheel assembly;
high frequency sinusoidal signals (126, 127) are applied at said third and fourth metallic annular strips (58, 59) so that the surrounding metallic frame of said wheel assembly does not follow the fast changes of high frequency oscillation;
the cables connecting said integrated electronic circuit to each one of said LEDs (5) are coated with a thick insulating material of low dielectric constant.

3. An indicator of the air pressure in the pneumatic tyres of a vehicle, comprising for each one of the wheels of the vehicle a tyre pressure gauge (1) operating in an ON-OFF switch mode and monitoring change in the tyre pressure from normal to abnormal, a system of metallic strips forming a capacitor, said system of metallic strips connected to said tyre pressure gauge (1) and to an electronic circuit, said electronic circuit including and activating an indicating means of warning the driver of the vehicle about a tyre with abnormal pressure, said indicator of the air pressure in the pneumatic tyres of the vehicle being **characterised** by that
said system of metallic strips comprises a first metallic strip (50), a second metallic strip (51), a third metallic strip (52) and a fourth metallic strip (53), a first pair of said first and second metallic strips (50, 51) being mounted onto an insulating layer (133) fixed onto the inner surface of a brake drum of each of the vehicle's wheels and a second pair of said third and fourth metallic strips (52, 53) being mounted onto a non-rotating insulated base (134) fixed at a non-rotating part of said vehicle, a pair of air capacitors being formed comprising a plane air capacitor and a cylindrical air capacitor, said plane air capacitor (51-53) being formed between said second and fourth metallic strips (51) and (53), wherein each one of said second and fourth metallic strips (51, 53) is of plane annular construction and disposed in an orientation normal to the central rotating wheel shaft (30) and said cylindrical air capacitor (50-52) being formed between said first and third metallic strips (50) and (52), wherein each one of said first and third metallic strips (50, 52) is of cylindrical construction and disposed in an orientation parallel to the central rotating wheel shaft (30);
said electronic circuit includes a high frequency oscillator and a frequency divider unit (19) to produce a square train pulse, an amplifier and a set of tuned filters unit (41) including a high-Q notch filter permitting the fundamental frequency of said square train pulse to pass in order to convert said square train pulse to a sinusoidal signal, a system of LEDs (5), one LED for each one of the wheels of the vehicle, said LEDs (5) constituting said indicating means of warning the driver of the vehicle about a tyre with abnormal pressure, a unit (40) including a half wave rectifier converting said sinusoidal signal to a D.C. level, a voltage comparator giving an output of said square train pulse whenever an input signal to said voltage comparator falls below a certain level and a monostable multivibrator increasing the amplitude of the square train pulse of said voltage comparator output, a single polarity D.C. power supply to a symmetrical polarity D.C. power supply converter (21), said tyre pressure gauge (1) electrically connecting as an ON-OFF switch said first pair of metallic annular strips (50, 51), said pair of air capacitors (51-53) and (50-52) being adapted to operate as a timing capacitor in said oscillator (19), wherein a first frequency range is produced to correspond to said ON position of said tyre pressure gauge (1) and a second frequency range is produced to correspond to said OFF position of said tyre pressure gauge (1), wherein said first frequency range falls within a gap of said high-Q notch filter of said amplifier and said set of -tuned filters unit (41) and passes with very high attenuation, while said second frequency range falls outside the gap of said high-Q notch filter and wherein said half wave rectifier converts the sinusoidal signal to the D.C. level, said voltage comparator providing said square train pulse output whenever the input signal to said voltage comparator falls below a certain level determined by a trimmer and said monostable multivibrator increases the amplitude of the square train pulse of said voltage comparator output by using a timing circuit, an output of said monostable multivibrator driving one of said LEDs (5), corresponding to a tyre with abnormal air pressure.

4. The indicator of the air pressure in the pneumatic tyres of a vehicle as claimed in above claim 3, **characterised** by that the operation efficiency of said indicator is improved when:
- a thin layer of dielectric material of high dielectric constant is inserted within said first plane air capacitor (51-53) and said second cylindrical air capacitor (50-52);
- the surfaces of said first, second, third and fourth metallic strips (50, 51, 52, 53) of said first plane air capacitor (51-53) and said second cylindrical air capacitor (50-52) that face each other are coated with a paste of high dielectric constant mixed with an epoxy resin;
- the separation coupling distance between said second and fourth metallic strips (51, 53) of said plane air capacitor (51-53) and between the first and third metallic strips (50, 52) of said cylindrical air capacitor (50-52) is selected to be a minimum distance;
- the area of each one of said first, second, third and fourth metallic strips (50, 51, 52, 53) is selected to be the maximum allowed by the dimensions of said brake drum;
- a parasitic capacitive coupling occurring between said first and second metallic strips (50, 51), said third and fourth metallic strips (52, 53), said second and third metallic strips (51, 52), said first and fourth metallic strips (50, 53) and between said first, second, third and fourth metallic strips (50, 51, 52, 53) and adjacent metallic parts of the vehicle is minimized, minimization of said parasitic capacitive coupling being effected when:
said first, second, third and fourth metallic strips (50, 51, 52, 53) are fixed at a distance which is selected to be the maximum from adjacent metallic surfaces of said wheel assembly allowed by the dimensions of said wheel assembly;
said first,second, third and fourth metallic annular strips (50, 51, 52, 53) are fixed at the minimum possible distance from adjacent metallic parts of said wheel assembly;
a minimum spacing between said first and second metallic strips (50,51) and between said third and fourth metallic strips (52,53) is selected;
each one of said insulating layer (133) and said insulating base (134) have a low dielectric constant and a thickness which is selected to be the maximum allowed by the dimensions of said wheel assembly;
a minimum thickness of said insulating layer (133) and said insulating base (134) is selected so that said first, second, third and fourth metallic annular strips (50, 51, 52, 53) are disposed at a maximum distance from the adjacent metallic parts of the wheel assembly;
high frequency sinusoidal signals (126, 127) are applied at said third and fourth metallic strips (52, 53), so that the surrounding metallic frame of said wheel assembly does not follow the fast changes of high frequency oscillation;
the cables connecting said integrated electronic circuit to each one of said LEDs (5) are coated with thick insulating material of a low dielectric constant.

5. An indicator of the air pressure in the pneumatic tyres of a vehicle, as claimed in above claim 1-4, wherein said integrated electronic circuit comprises a plurality of LEDs (5) corresponding to the number of the wheels of the vehicle, so that a single said integrated electronic circuit is used for all the wheels of the vehicle.

6. An indicator of the air pressure in the pneumatic tyres of a vehicle, as claimed in claim 1 or 3, said tyre pressure gauge (1) comprising a pair of durable rubber layers of a certain thickness (61), said pair of durable rubber layers (61) elastically moving in response to variations in the air pressure in the pneumatic tyre of the vehicle, **characterised** by said pair of durable rubber layers (61) containing therebetween a thin curved zig-zag steel wire (60), said durable rubber layers enclosing air-tightly a chamber (68), said chamber (68) communicating through a tube (69) with the interior of said tyre, a sensitive ON-OFF microswitch (62) being electrically connected to said first and second metallic annular strips (56, 57), an electrode (63) being mounted at the middle of said pair of durable rubber layers (61), said electrode (63) being connected with said steel wire (60), and a regulating screw (67) extending vertically upwards said electrode (63) and being used to adjust the position of said microswitch (62).

7. An indicator of the air pressure in the pneumatic tyres of a vehicle as claimed in above claim 6, **characterised** by said tyre pressure gauge (1) further comprising within said chamber (68) a plurality of small elastic rubber balls and foamy material (78) with elastic properties, soft springs (70) being diagonally disposed within said chamber (68) so as to enhance elasticity of said foamy material and said small elastic rubber balls.

8. An indicator of the air pressure in the pneumatic tyres of a vehicle, as claimed in above claim 1 or 3, said tyre pressure gauge (1) comprising a durable rubber layer (81) elastically moving in response to variations in the air pressure in the pneumatic tyre of the vehicle, **characterised** by a chamber (88), said chamber (88) being filled with compressed gas and being closed on the top by said rubber layer (81), said rubber layer (81) being held in position by a pair of springs (80) being fixed to the walls of said tyre pressure gauge (1).

9. An indicator of the air pressure in the pneumatic tyres of a vehicle as claimed in claims 6-8, said tyre pressure gauge (1) being disposed onto an air inlet valve opening (99), said air inlet valve opening (99) being fixed externally onto a metallic rim (24) of said wheel assembly.

10. An indicator of the air pressure in the pneumatic tyres of a vehicle as claimed in claims 6-8, said tyre pressure gauge (1) being disposed onto an air inlet valve opening (99), said air inlet valve opening (99) being fixed internally onto a metallic rim (24) of said wheel assembly.

11. An indicator of the air pressure in the pneumatic tyres of a vehicle as claimed in above claims 1 or 3, being **characterised** by that said tyre pressure gauge (1) comprises an electrode (93), one end of said electrode (93) being fixedly mounted onto a basement wall (90) and the other end of said electrode (93) being moving in between a pair of contact points (96) of a microswitch (92) in response to variations in air pressure in the pneumatic tyre of the vehicle, a chamber (98) being defined by a pair of folding walls (91), said basement wall (90) and a basement wall (103).

12. An indicator of the air pressure in the pneumatic tyres of a vehicle as claimed in claim 11, **characterised** by said chamber (98) being filled up with a heavy gas having a pressure equivalent to the normal tyre pressure.

13. An indicator of the air pressure in the pneumatic tyres of a vehicle as claimed in claim 11, wherein said chamber (98) is filled up with air through an inlet valve (99), said inlet valve (99) being fixed on said basement wall (103) and projecting outward said metallic rim (24) of said wheel assembly.

## Patentansprüche

1. Ein Luftdruckanzeigegerät in den pneumatischen Reifen eines Fahrzeugrad bestehend für jedes Fahrzeugrad aus einem Druckmessgerät (1), das mit einem ON-OFF Schalter funktioniert und über den Wechsel des Reifendrucks von normalen zum abnormalen Zustand benachrichtig, aus einem System von Metallstreifen, ein Kapazitätsgerät bilden, das erwähnte Metallstreifensystem verbunden zu dem erwähnter Raddruckmeßgerät (1) und zu einem elektronischen Kreislauf, der ein Signal einbegrifft und aktiviert. welches den Autofahrer über einen Reifen mit abnormalem Druck warnt, und wobei das erwähnte Luftdruckanzeigegerät in den pneumatischen Fahrzeugrädern gekennzeichnet ist durch daß
das Metallstreifensystem aus einem ersten Ringmetallstreifen (56), einem zweiten Ringmetallstreifen (57), einem dritten Ringmetallstreifen (58) und einem vierten Ringmetallstreifen (59) besteht, bei dem ein erstes Paar der genannten ersten und zweiten Ringstreifen (56, 57) konzentrisch auf eine Isolierschicht (123) befestigt wird, die auf die innere Fläche der Bremstrommeln jedes Fahrzeugrades fixiert wird und wobei ein zweites Paar der genannten dritten und vierten Ringmetallstreifen (58, 59) auf einer nicht drehenden Isolierbasis (124) konzentrisch befestigt wird, das an einem nicht drehenden Teil des Fahrzeuges fixiert wird, ein Paar von Luftkapazitäten (56 - 58) und (57 - 59) gebildet zwischen dem erwähnten erster Paar der ersten und der zweiten Ringmetallstreifen (56, 57), und dem erwähnten zweiten Paar der dritten und vierten Ringmetallstreifen (58, 59),
der gennante elektronische Kreislauf besteht aus einer Hochfrequenzoszillator und einem Frequenzteiler (19) um einem Quadratzugpuls zu erzeugen, einen Verstärker und eine Reihe von eingestellten Filtern (41) einschließend einem Hoch-Q Nutenfilter, der gestattet die Grundfrequenz des erwähnten Quadratzugpulses durchzulassen um den erwähnten Quadratzugpuls in ein Sinussignal umzuwandeln, ein System von LEDs (5), ein LED für jedes Autorad, wobei die erwähnten LEDs (5) die erwähnten Anzeigegeräte bilden, die den Autofahrer über einen Reifen mit abnormalem Druck warnen, eine Einheit (40) die einem Halbwellengleichrichtes umfaßt, der das erwähnte Sinussignal zu einem D.C. Niveau umwandelt, einen Spannungsvergleicher, der ein Ausgangssignal gibt, wenn ein Eingangssignal zu dem erwähnten Spannungsvergleicher unter ein bestimmes Niveau fällt und ein einstabiler Vielvibrator, der die Amplitude des Quadratzugpulses des erwähnten Spannungsvergleichers vergrößert, eine einpolarisierte D.C. (Gleichspannung; Stromversorgung (21) , das erwähnte Reifendruckmeßgerät (1), elektrisch verbunden als ein ON-OFF Schalter des erwähnten ersten Paares der ersten und der zweiten Ringmetallstreifen (56, 57) des erwähnten Paares den Luftkapazitäten (56 - 58) und (57 - 59), angepaßt um als Zeitkapazität in erwähnten Oszillatorkreislaufs (19) zu funktionieren, wo ein erster Frequenzkreislauf erzeugt wird um der erwähnten OFF Stellung des erwähnten Luftdruckmeßgeräts (1) zu entsprehen, wobei der der erwähnte erste Frequenzbereich in die Lücke des erwähnter Hoch-Q Nutenfilters, des erwähnten Verstärkers und der erwähnten Reihe von eingestellten Filtern (41) fällt und mit sehr hoher Abwäschung durchquert, während der erwähnte zweite Frequenzbereich außerhalb der Lücke (Spalte) des erwähnten Hoch-Q Nutenfilters fällt und wo (bei) der erwähnte Halbwellengleichrichter das Sinussignal zum D.C. Niveau umwandelt, wobei der erwähnte Spannungsvergleicher den erwähnten Quadratzugausgangspuls liefert, wenn das Eingangssignal zum erwähnten Spannungsvergleicher unter ein bestimmtes Niveau fällt, das von einem Trimmer und einem einstabilen Vielvibrator bestimmt wird, welches die Amplitude des Quadratzugpulses des erwähnten Spannungsvergleicherausgangs vergrößert, indem ein Zeitkreislauf benutzt wird, wobei ein Ausgang des erwähnter einstabilen Vielvibrators ein der erwähnten LEDs (5) führt, die die zu einem Reifen mit abnormalen Luftdruck führt.

2. Ein Anzeigegerät des Luftdrucks in den pneumatischen Fahrzeugreifen, wie er beansprucht wird in Anspruch 1, gekennzeichnet von der Funktionsausbente des erwähnten Anzeigegeräts, verbessert wenn:
- eine dünne Schicht von einem dielektrischen Material mit hoher dielektrischer Konstante in die erwähnten Luftkapazitäten (56 - 58) und (57 - 59) eingeführt wird;
- die Oberflächen der erwähnten ersten, zweiten, dritten und vierten Ringmetallstreifen der erwähnten Luftkapazitäten, die gegenüber stehen, (56-58) und (57-59), angestrichen werden mit einer Paste von hoch dielektrischer Konstante, gemischt mit einem Epoxy-Harz;
- der Trennungs-Kupplungsabstand zwischen den erwähnten ersten und dritten Ringmetallstreifen (56, 58) der erwähnten Luftkapazitäten (56 - 58) und den erwähnten zweiten und vierten Ringmetallstreifen (57, 59) der erwähnten Luftkapazitäten (57 - 59) gewählt wird, ein minimaler Abstand zu sein;
- die Fläche jedes der erwähnten ersten, zweiten, dritten und vierten Ringmetallstreifen (56, 57, 58, 59) gewählt wird, das maximum, erlaubt (gestatet) bei den Dimensionen der erwähnten Bremsentrommel, zu sein;
- einen parasitische Kapazitätskupplung, die stattfindet zwischen den erwähnten ersten und zweiten Ringmetallstreifen (56, 57), den erwähnten dritten und vierten Ringmetallstreifen (58, 59), den erwähnten zweiten und dritten Ringmetallstreifen (57, 58), den erwähnten ersten und vierten Ringmetallstreifen (56, 59) und zwischen den erwähnten ersten, zweiten, dritten und vierten Ringmetallstreifen (56, 57, 58, 59) und den anliegender Metalloberflächen des Fahrzeuges verringert wird, während die Verringerung der erwähnten parasitische Kapazitätskupplung beeinflußt wird, wenn:
- die erwähnten ersten, zweiten, dritten und vierter Ringmetallstreifen (56, 57, 58, 59) fixiert werden an einen möglichst minimalen Abstand von dem anliegenden Metallteilen der erwähnten Radmontage;
- ein minimaler Abstand zwischen den erwähnten ersten und zweiten konzentrischen Ringmetallstreifen (56, 57) und zwischen den erwähnten dritten und vierten konzentrischer Ringmetallstreifen (58, 59) ausgewählt wird;
- jeder der erwähnten Isolierungsschichten (123) und Isolierungsbasis (124) eine niedrige dielektrische Konstante und eine Dicke haben, die ausgewählt ist die maximale, erlaubt (gestattet) bei den Dimensionen der erwähnten Radmontage, zu sein;
- eine minimale Dicke jedes der erwähnten Isolierungsschichten (123) und die Isolierungsbasis (124) gewählt wird, sodaß die ersten, zweiten, dritten und vierten Ringmetallstreifen (56, 57, 58, 59) angeordnet sind an einem maximalen Abstand von den anliegenden Metallteilen der Radmontage;
- hochfrequente Sinussignale (126, 127) angewandt werden bei den erwähnten dritten und vierten Ringmetallstreifen (58, 59), sodaß der umgebene Metallrahmen der erwähnten Radmontage nicht die schnellen Änderungen der Hochfrequenzoszillation folgt;
- die Kabel, die den genannten integralen elektronischen Kreislauf zu jedem der genannten LEDs (5) verbindet, angestrichen sind mit einem dicken Isolierungsmaterial einer niedrigen dielektrischen Konstante.

3. Ein Luftdruckanzeigegerät in den pneumatischen Fahrzeugradreifen, das für jedes Fahrzeugrad ein Druckmessgerät (1) enthällt, das in der ON-OFF Schalterart funktioniert und die Änderung in dem Reifendruck von normal zu abnormal überwacht, wobei ein System von Metallstreifen, einen Kondensator formt, das erwähnte Metallstreifensystem mit dem erwähnten Reifendruckmeßgerät (1) das zu einem elektronischen Kreislauf verbunden ist, wobei der elektronischen Kreislauf der elektronische Kreislauf ein Anzeigegerät einschließt und aktiviert um den ein Autofahrer vor dem einen abnormalem Reifendruck zu warnen, und das erwähnte Luftdruckanzeigegerät in den pneumatischen Autoreifen, gekennzeichnet durch
das erwähnte Metallstreifensystem, das einen ersten Metallstreifen (50), einen zweiten Metallstreifen (51), einen dritten Metallstreifen (52) und einen vierten Metallstreifen (53) enthält, wobei ein erstes Paar von den erwähnten ersten und zweiten Metallstreifen (50, 51) an einer Metallschicht montiert ist, die an der inneren Oberfläche einer Bremstrommel jedes Fahrzeugrades befestigt ist, und ein zweites Paar der dritten und vierten Metallstreifen (52, 53) an einer nicht rotierenden Isolierbasis (134) montiert ist, die an dem nicht rotierenden Teil des erwähnten Fahrzeuges befestigt ist, wobei ein Paar von Luftkapazitäten geformt (gebildet) wird, das eine ebenen Luftkapazität und eine zylindrische Luftkapazität enthält, wobei die eben Luftkapazität (51 - 53) zwischen den erwähnten zweiten und vierten Metallstreifen (51) und (53), wobei jeder der zweiten und vierten Metallstreifen (51, 53) eine Ringkonstruktion hat und angeordnet ist in einer normalen Orientation zum Zentralschaft des rotierendes Rades (30) und wobei die erwähnte zylindrische Luftkapazität (50 - 52) zwischen den erwähnten ersten und dritten Metallstreifen (50) und (52) geformt wird, wobei jeder der erwähnten ersten und dritten Metallstreifen (50, 52) von zylindrische Konsruktion ist und geordnet ist paralleler Orientation zu dem Zentralschaft (30) des rotierendem Rad
der gennante elektronische Kreislauf enthält einen Hochfrequenzoszillator und eine Frequenzteilereinheit (19) um einen Quadratzugpuls zu erzeugen, einen Verstärker und eine Reiheeinheit von eingestellten Filtern (41) einschließend eines hoches Q Nutenfilters, das gestattet die fondamentale Frequenz des erwähnten Quadratzugpulses durchzulassen um den erwähnten Quadratzugpuls in ein Sinussignal umzuwandeln, ein System von LED's (5), ein LED für jedes der Fahrzeugräder, wobei die erwähnten LEDs (5) die erwähnten Anzeigegerät umfasst um den Autofahrer über einen Reifen mit abnormalem Druck warnen, eine Einheit (40) die einem Halbwellengleichrichter enthält, welcher das erwähnte Sinussignal zu einem D.C. Niveau umwandelt, wobei ein Spannungsvergleicher ein Ausgangssignal des erwähnter. Quadratzugimpulses gibt, wenn das Eingangssignal des erwähnten Spannungsvergleichers unter ein bestimmes Niveau fällt und ein einstabiler Vielvibrator die Amplitude des Quadratzugpulses des erwähnten Spannungsvergleichersausgangs vergrößert, sowie eine D.C. Stromversorgungumwandler mit symmetrischer Polarität (21) , wobei das erwähnte Reifendruckmeßgerät (1) elektrisch zu einem ON-OFF Schalter verbunden ist von dem erwähnten ersten Paares von Ringmetallstreifen (50, 51) der erwähnten Luft kapazität (51 - 53) und (50 - 52), angepaßt um als Zeitkapazität in dem erwähnten Oszillator (19) zu funktionieren, wobei das erste Frequenzsystem erzeugt (produziert) wird um der erwähnten Stellung des erwähnten Luftdruckmeßgeräts (1), wobei der der erwähnte erste Frequenzbereich in die Lücke des erwähnten Hoch-Q Nutenfilters, des erwähnten Verstärkers und einer Reihe von eingestellten Filtern (41) fällt, während die erwähnte Reihe von eingestellten Filtereinheiten (41) mit sehr hoher Entkräftung (Schwächung) vorbeigeht und während ein erwähnter zweiter Frequenzbereich außerhalb der Lücke des erwähnten hoch Q Nutenfilters fällt und wobei der erwähnte Halbwellengleichrichter das Sinussignal in den erwähnten D.C. Spannungsvergleichers umwandelt wird, indem er den Quadratzugausgangspuls gibt, wenn das Eingangssignal des erwähnten Spannungsvergleichers unter ein bestimmtes Niveau fällt, das von einem Trimmer und einem einstabilen Vielvibrator bestimmt erhölt die Amplitude des Quadratzugpulses des genannten Spannungsvergleicherausgangs vergrößert, indem ein Zeitkreislauf benutzt wird, ein Ausgangssignal des erwähnten einstabiles Vielvibrators, das einen der erwähnten LEDs (5) führt, entsprechend eines Reifens mit abnormalen Luftdruck.

4. Das Luftdruckanzeigegerät in den pneumatischen Fahrzeugreifen, wie beansprucht in dem oben erwähnten Anspruch 3, ist gekennzeichnet dadurch, daß die Funktionsleistung des erwähnten Anzeigegeräts verbessert wird, wenn:
- eine dünne Schicht von dielektrischem Material mit hoher dielektrischen Konstante eingeführt wird in die erwähnte erste ebene Luftkapazität (50-52);
- die Oberflächen der erwähnten ersten, zweiten, dritten und vierten Metallstreifen (50, 51, 52, 53) der erwähnten ersten ebenen Luftkapazität (51 - 53) und der erwähnten zweiten zylindrischen Luftkapazität (50 - 52), die gegenüber liegen, belegt sind mit einer Paste von hocher dielektrischen Konstante, gemischt mit einem Epoxy-Harz;
- der Trennungs-Kupplungs-Abstand zwischen den erwähnten zweiten und vierten Metallstreifen (51, 53) der erwähnten ebenen Kapazität (51-53) und zwischen den ersten und dritten Metallstreifen (50, 52) der erwähnten zylindrischen Luftkapazitäten (50 - 52) gewählt wird ein minimaler Abstand zu sein;
- die Fläche von jedem der erwähnten ersten, zweiten, dritten und vierten Metallstreifen gewählt wird die maximale erlaubte, von den Dimensionen der erwähnten Bremstrommel, zu sein;
- einen parasitische Kapazitätskupplung, die stattfindet zwischen den erwähnten ersten und zweiten Metallstreifen (50, 51), den erwähnten dritten und vierten Metallstreifen (51, 53), den erwähnten ersten und vierten Metallstreifen (50, 53) und zwischen den erwähnten ersten, zweiten, dritten und vierten Metallstreifen (50, 51, 52, 53) und den anliegenden Metallteilen des Fahrzeugs minimalisiert wird, wobei die Minimalisierung der erwähnten parasitischen Kapazitätskupplung beeinflußt wird, wenn:
- die erwähnten ersten, zweiten, dritten und vierten Metallstreifen (50, 51, 52, 53) fixiert sind in einem Abstand, der gewählt wird als Maximum von den beiliegenden Metalloberflächen der erwähnten Radmontage;
- ein minimaler Abstand zwischen den erwähnten ersten und zweiten Metallstreifen (50, 51) und zwischen den erwähnten dritten und vierten Metalloberflächen (52, 53) gewählt wird;
- jeder der erwähnten Isolierungsschichten (133) und der erwähnten Isolierungsbasis (134) eine kleine dielektrische Konstante hat, sowie eine Dicke, die gewählt wird das Maximum zu sein bezüglich der Dimensionen der erwähnten Radmontage,;
- eine minimale Dicke jedes der erwähnten Isolationsschicht (133) und der erwähnten Isolierungsbasis (124) gewählt wird, sodaß die ersten, zweiten, dritten und vierten Ringmetallstreifen (50, 51, 52, 53) angesetzt sind an einem maximalen Abstand von den benachbarten Metallteilen der Radmontage;
- Sinussignals mit hoher Frequenz (126, 127) werden angebracht an den erwähnten dritten und vierten Metallstreifen (52, 53), sodaß der umgebene Metallrahmen der erwähnten Radmontage nicht die schnellen Änderungen von hoher Frequenzoszillation verfolgt;
- die Kabeln, die den integrierten elektronischen Kreislauf zu jedem der genannten LED's (5) verbindet, überzogen sind mit einem dicken Isolierungsmaterial von niedriger dielektrischer Konstante.

5. Ein Anzeigegerät des Luftdrucks in den pneumatischen Fahrzeugreifen, wie es beansprucht wird von den oben genannten Ansprüchen (1 - 4), wobei der erwähnte integrierte elektronische Kreislauf eine Vielfältigkeit von LED's (5) ergibt, die einer Nummer von Fahrzeugrädern entsprechen, sodaß ein einfacher integrierter elektronischer Kreislauf benutzt wird für alle Fahrzeugräder.

6. Ein Anzeigegerät des Luftdruckes in den pneumatischen Fahrzeugreifen, wie beansprucht in den Ansprüchen 1 oder 3, das erwähnte Reifendruckmeßgerät (1), bestehend aus einem Paar von haltbaren Kautschukschichten einer bestimmten Dicke (61), wobei das erwähnte Paar von haltbaren Kautschukschichten (61) sich elastisch bewegt, entsprechend der Variationen (Änderungen) des Luftdrucks in den pneumatischen Reifen des Fahrzeugs, gekennzeichnet durch das erwähnte Paar von haltbaren Kautschukschichten (61) dazwischen einen dünnen gebogenen zig-zag Stahldraht (60), wobei die erwähnte haltbare Kautschukschichten einen Raum (68) luftdicht einschließen, wobei der erwähnte Raum (68) durch ein Rohr (69) mit dem Inneren des Reifens verkehrt, ein empfindlicher ON-OFF Mikroschalter (62) elektrisch verbunden zu den erwähnten ersten und zweiten Ringmetallstreifen (56, 57), eine Elektrode (63) befestigt in der Mitte des erwähnten Paares der haltbaren Kautschukschichten (61) der erwähnten Elektrode (63) verbunden mit dem erwähnten Stahldraht (60) und einer Regelschaube (67), die sich senkrecht nach oben zu der erwähnten Elektrode (63) ausdehnt und benutzt wird um die Stellung des erwähnten Mikroschalters (62) anzupassen.

7. Das Anzeigegerät des Luftdrucks in den pneumatischen Reifen eines Fahrzeugs, wie im Anspruch 6 beansprucht, gekennzeichnet durch das erwähnte Reifendruckmeßgerät (1), außerdem einschließend im erwähnten Raum (68) eine Pluralität von elastischen Kautschukballen und schaumigem Material(78) mit elastischen Eigenschaften, weichen Federn (70) diagonal angeordnet im erwähnten Raum (68) um die Elastizität des erwähnten schaumigen Materials und der erwähnten kleinen elastischen Kautschukbälle zu erhöhen.

8. Das Anzeigegerät des Luftdruckes in den pneumatischen Fahrzeugreifen, wie beansprucht in obenerwähnten Anspruch 1 oder 3, wobei das erwähnte Reifendruckmeßgerät (1) eine haltbare Kautschukschicht (81) einschließt, die sich elastisch bewegt, entsprechend der Luftdruckvariationen im pneumatischen Reifen des Fahrzeugs, gekennzeichnet durch einen Raum (88), wobei der erwähnte Raum (88) mit kondensiert Gas gefüllt ist und oben geschlossen ist mit einer Kautschukschicht (81), wobei die erwähnte Kautschukschicht (81) in Stellung gehalten wird bei einem Paar von Federn (80), befestigt ist an den Wändern des genannten Reifendruckmeßgerät (1) .

9. Ein Luftdruckanzeigegerät in den pneumatischen Reifen eines Fahrzeugs, wie beansprucht in den Ansprüchen 6 - 8, wobei das erwähnte Luftdruckmeßgerät (1) angeordnet ist zu einer Lufteingangsventilöffnung (99) , welche außerhalb fixiert ist zu einem Metallrahmen (24) der erwähnte Radmontage.

10. Ein Anzeigegerät des Luftdrucks in den pneumatischen Fahrzeugreifen, wie beansprucht in den Ansprüchen 6 - 8, wobei das erwähnte Luftdruckmeßgerät der Lufteingangsventilöffnung (99) innerhalb fixiert ist an einem Metallrahmen (24) der erwähnten Radmontage.

11. Ein Anzeigegerät des Luftdrucks in den pneumatischen Fahrzeugreifen beansprucht in folgenden Ansprüchen 1 - 3, gekennzeichnet durch daß das Luftdruckmeßgerät (1) aus einem Elektrod (93) besteht, wobei ein Ende der erwähnten Elektrode (93) sich zwischen einem Paar von Kontaktpunkten (96) eines Mikroschalters (92) bewegt, je nach den Variationen des Luftdrucks in den pneumatischen Fahrzeugreifen, wobei ein Raum (98) bestimmt ist durch ein Paar von gefalltenen Wänden (91), einer erwähnten Grundlangewand (90) und einer Grundlangewand (103).

12. Ein Anzeigegerät des Luftdruckes in den pneumatischen Fahrzeugreifen, wie es beansprucht wird im Anspruch 11, gekennzeichnet durch den erwähnten Raum (98) der mit Schwergas gefüllt wird, das einen Druck gleich dem normalen Luftdruck der Reifen hat.

13. Ein Anzeigegerät des Luftdruckes in den pneumatischen Fahrzeugreifen, wie beansprucht im Anspruch 11, wobei der erwähnte Raum (98) mit Luft gefüllt wird durch ein Eingangsventil (99), wobei das erwähnte Ventil (99) an der Grundlagenwand (103) fixiert wird und ein Metallrahmen der erwähnten Radmontage auswärts vorgeschloben (projektiert) wird.

## Revendications

1. Un indicateur de la pression d'air dans les pneumatiques du véhicule, comprenant pour chaque roue du véhicule une jauge de pression de pneus (1) fonctionnant avec un interrupteur de fermeture et de repos et contrôlant les changements de la pression de pneus de la normale à l'anormale, un système de lames métalliques formant un condensateur, le système de lames métalliques mentionné ci-dessus relié à la jauge de pression de pneus mentionnée ci-dessus (1) et à un circuit électronique, le circuit électronique ci-dessus comprenant et activant un indicateur qui avertit le chauffeur du pneu à pression anormale, 1' indicateur de la pression d'air dans les pneumatiques du véhicule mentionné ci-dessus étant caractérisé par le fait que
le système de lames métalliques mentionné ci-dessus comprend une lame métallique annulaire (56), une deuxième lame métallique annulaire (57), une troisième lame métallique annulaire (58) et une quatrième lame métallique annulaire (59), une première paire de la deuxième et de la troisième lame métallique annulaire mentionnées ci-dessus (56, 57) étant installée d'une manière concentrique sur une couche isolatrice (123) attachée au dessus de la surface intérieure d'un tambour de frein de chaque roue du véhicule et une deuxième paire de la troisième et de la quatrième lame métallique annulaire mentionnées ci-dessus (58, 59) étant installée d'une manière concentrique sur une base isolée non-rotative (124) attachée à la partie non-rotative du véhicule mentionné ci-dessus, une paire de condensateurs d'air (56-58) et (57-59) étant formée entre la première paire de la première et de la deuxième lame métallique annulaire mentionnée ci-dessus (56,57), et la deuxième paire de la troisième et de la quatrième lame métallique annulaire ci-dessus (58, 59);
le circuit électronique mentionné ci-dessus comprend un oscillateur de haute fréquence et une unité de division de fréquence (19) afin de produire une pulsion de train carré , un amplificateur et une série d'unité de filtres accordés (41) comprenant un filtre de brèche de haut Q permettant à la fréquence fondamentale de la pulsion de train carré mentionnée ci-dessus de passer afin de convertir la pulsion de train carré mentionnée ci-dessus en un signal sinusoidal, un système des diodes émettant de la lumière (LED) (5), une diode émettant de la lumière (LED) pour chaque roue du véhicule, les diodes émettant de la lumière mentionnées ci-dessus (LED) (5) étant 1' indicateur mentionné ci-dessus qui avertit le chauffeur du pneu à pression anormale, une unité (40) comprenant un rectificateur de demi-ondes qui convertit le signal sinusoidal en un niveau de courant continu, un comparateur de tension fournissant une sortie d'une pulsion de train carré quand un signal d'entrée au comparateur de tension mentionné ci-dessus est au dessous d'un certain niveau et un multivibrateur monostable augmentant l'amplitude de la pulsion de train carré de la sortie du comparateur de tension mentionné ci-dessus, une fourniture d'énergie électrique de courant continu monopolaire à un adapteur de fourniture d'énergie électrique de courant continu de polarité symmétrique (21), la jauge de pression de pneus mentionnée ci-dessus(1) reliant électriquement comme un interrupteur de fermeture et de repos la première paire mentionnée ci-dessus de la première et de la deuxième lame métallique annulaire (56, 57), la paire de condensateurs d'air (56-58) et (57-59) mentionnée ci-dessus étant adaptée à fonctionner comme un condensateur de réglage dans le circuit d'oscillateur mentionné ci-dessus (19), où une première gamme de fréquences est produite pour être conforme à la position de fermeture de la jauge de pression de pneus mentionnée ci-dessus(1) et une deuxième gamme de fréquences est produite pour être conforme à la position de repos de la jauge de pression de pneus mentionnée ci-dessus (1), où la première gamme de fréquences mentionnée ci-dessus est dans un intervalle du filtre de brèche de haut Q ci-dessus de l'amplificateur mentionné ci-dessus et la série d'unité de filtres accordés mentionnée ci-dessus (41) et passe avec une atténuation très haute, tandis que la deuxième gamme de fréquences mentionnée ci-dessus est hors de 1' intervalle du filtre de brèche de haut Q mentionné ci-dessus et où le rectificateur de demi-ondes convertit le signal sinusoidal en le niveau de courant continu, le comparateur de tension ci-dessus fournissant la sortie de la pulsion de train carré ci-dessus quand le signal d'entrée au comparateur de tension mentionné ci-dessus est au dessous d'un certain niveau déterminé par un dispositif compensateur et le multivibrateur monostable ci-dessus augmentant l'amplitude de la pulsion de train carré de la sortie du comparateur de tension mentionné ci-dessus en employant un circuit de réglage, une sortie du multivibrateur monostable ci-dessus qui conduit une des diodes émettant de la lumière (LED) (5), étant conforme à un pneu à pression d'air anormale.

2. L' indicateur de la pression d'air dans les pneumatiques du véhicule, selon la revendication 1, caractérisé par le fait que la bonne opération de 1' indicateur ci-dessus est améliorée quand:
- une couche mince de matière non-conductrice de haute constante non-conductrice est insérée dans les condensateurs d'air ci-dessus (56-58) et (57-59);
- les surfaces de la première, deuxième, troisième et quatrième lame métallique annulaire des condensateurs d'air ci-dessus étant l'un en face de l'autre (56-58) et (57-59) sont enrobées d'une pâte de haute constante non-conductrice melangée avec une résine epoxy;
- la distance d'écart de couplage entre la première et la troisième lame métallique annulaire ci-dessus (56,58) de condensateur d'air ci-dessus et la deuxième et la quatrième lame métallique annulaire ci-dessus (57,59) de condensateur d'air ci-dessus est choisie d'être une distance minimale;
- la surface de la première, de la deuxième, de la troisième et de la quatrième lame métallique annulaire ci-dessus (56, 57, 58, 59) est choisie d'être la surface maximale permise par les dimensions du tambour de frein ci-dessus;
- un couplage de capacité de charge parasite se trouvant entre la première et la deuxième lame métallique annulaire ci-dessus (56, 57), la troisième et la quatrième lame métallique annulaire ci-dessus (58, 59), la deuxième et la troisième lame métallique annulaire ci-dessus (57, 58), la première et la quatrième lame métallique annulaire ci-dessus (56, 59) et entre la première, la deuxième, la troisième et la quatrième lame métallique annulaire ci-dessus (56, 57, 58, 59) et les parties métalliques contigues du véhicule est restreint au minimum, et la minimization du couplage de capacité de charge parasite ci-dessus se réalise quand:
la première, la deuxième, la troisième et la quatrième lame métallique annulaire ci-dessus (56, 57, 58, 59) sont arrangées à une distance permise maximale qui est choisie d'être la distance maximale des surfaces métalliques contigues du montage des roues ci-dessus, permise par les dimensions du tambour de frein ci-dessus;
la première, la deuxième, la troisième et la quatrième lame métallique annulaire ci-dessus (56, 57, 58, 59) sont arrangées à la distance minimale des parties métalliques contigues du montage des roues ci-dessus;
un espacement minimal entre la première et la deuxième lame métallique annulaire ci-dessus (56, 57) et entre la troisième et la quatrième lame métallique annulaire ci-dessus (58, 59) est choisi;
la couche isolatrice ci-dessus (123) et la base isolatrice ci-dessus (124) ont une constante non-conductrice basse et une épaisseur qui est choisie d'être l'épaisseur maximale permise par les dimensions du montage des roues ci-dessus;
une épaisseur minimale de la couche isolatrice ci-dessus (123) et de la base isolatrice ci-dessus (124) est choisie de façon que la première, la deuxième, la troisième et la quatrième lame métallique annulaire ci-dessus (56, 57, 58, 59) sont arrangées à la distance maximale des parties métalliques contigues du montage des roues;
les signaux sinusoidaux de haute fréquence (126,127) sont appliqués à la troisième et la quatrième lame métallique annulaire ci-dessus (58, 59) afin que le cadre métallique entourant du montage des roues ci-dessus ne suive pas les changements rapides d'oscillation de haute fréquence;
les câbles réunissant le circuit électronique intégré ci-dessus à chaque diode émettant de la lumière ci-dessus (5) sont enrobés d'une matière isolatrice épaisse de basse constante non-conductrice.

3. L' indicateur de la pression d'air dans les pneumatiques du véhicule, comprenant pour chaque roue du véhicule une jauge de pression de pneus (1) fonctionnant avec un interrupteur de fermeture et de repos et contrôlant les changements de la pression de pneus de la normale à l'anormale, un système de lames métalliques formant un condensateur, le système de lames metalliques mentionné ci-dessus relié à la jauge de pression de pneus mentionnée ci-dessus (1) et à un circuit électronique, le circuit électronique mentionné ci-dessus comprenant et activant un indicateur qui avertit le chauffeur du pneu à pression anormale, 1' indicateur de la pression d'air dans les pneumatiques du véhicule mentionné ci-dessus étant caractérisé par le fait que
le système de lames metalliques mentionné ci-dessus comprend une première lame métallique (50), une deuxième lame métallique (51), une troisième lame métallique (52) et une quatrième lame métallique (53), une première paire de la première et de la deuxième lame métallique mentionnées ci-dessus (50, 51) étant installée sur une couche isolatrice (133) attachée à la surface intérieure d'un tambour de frein de chaque roue du véhicule et une deuxième paire de la troisième et de la quatrième lame métallique mentionnées ci-dessus (52, 53) étant installée sur une base isolée non-rotative (134) attachée à la partie non-rotative du véhicule mentionné ci-dessus, une paire de condensateurs d'air qui comprend un condensateur d'air rectiligne et un condensateur d'air cylindrique, le condensateur d'air rectiligne ci-dessus étant formé entre la deuxième et la quatrième lame métallique mentionnées ci-dessus (51) et (53), où la deuxième et la quatrième lame métallique ci-dessus (51, 53), sont de construction annulaire rectiligne et arrangées à une orientation normale par rapport à l'arbre de roues tournant central (30) et le condensateur d'air cylindrique ci-dessus (50-52) étant formé entre la première et la troisième lame métallique mentionnées ci-dessus (50) et (52), où la première et la troisième lame métallique ci-dessus (50, 52) sont de construction cylindrique et arrangées à une orientation parallèle à l'arbre de roues tournant central (30);
le circuit électronique mentionné ci-dessus comprend un oscillateur d'haute fréquence et une unité de division de fréquence (19) afin de produire une pulsion de train carré , un amplificateur et une série d'unité de filtres accordés (41) comprenant un filtre de brèche de haut Q permettant à la fréquence fondamentale de la pulsion de train carré ci-dessus de passer afin de convertir la pulsion de train carré ci-dessus en un signal sinusoidal, un système des diodes émettant de la lumière (LED) (5), une diode émettant de la lumière (LED) pour chaque roue du véhicule, les diodes émettant de la lumière (LED) mentionnées ci-dessus (5) étant 1' indicateur ci-dessus qui avertit le chauffeur du pneu à pression anormale, une unité (40) comprenant un rectificateur de demi-ondes qui convertit le signal sinusoidal en un niveau de courant continu, un comparateur de tension fournissant une sortie d'une pulsion de train carré quand un signal d'entrée au comparateur de tension mentionné ci-dessus est au dessous d'un certain niveau et un multivibrateur monostable augmentant l'amplitude de la pulsion de train carré de la sortie du comparateur de tension ci-dessus, une fourniture d'énergie électrique de courant continu monopolaire à un adapteur de fourniture d'énergie électrique de courant continu de polarité symmétrique (21), la jauge de pression de pneus mentionnée ci-dessus(1) reliant électriquement comme un interrupteur de fermeture et de repos la première paire ci-dessus des lames métalliques annulaires (50, 51), la paire de condensateurs d'air (51-53) et (50-52) mentionnée ci-dessus étant adaptée à fonctionner comme un condensateur de réglage dans le circuit d'oscillateur ci-dessus (19), où une première gamme de fréquences est produite pour être conforme à la position de fermeture de la jauge de pression de pneus mentionnée ci-dessus (1) et une deuxième gamme de fréquences est produite pour être conforme à la position de repos de la jauge de pression de pneus mentionnée ci-dessus (1), où la première gamme de fréquences ci-dessus est dans un intervalle du filtre de brèche de haut Q mentionné ci-dessus de l'amplificateur mentionné ci-dessus et la série d'unité de filtres accordés ci-dessus (41) et passe avec une atténuation très haute, tandis que la deuxième gamme de fréquences mentionnée ci-dessus est hors de 1' intervalle du filtre de brèche de haut Q mentionné ci-dessus et où le rectificateur de demi-ondes convertit le signal sinusoidal en le niveau de courant continu, le comparateur de tension ci-dessus fournissant la sortie de la pulsion de train carré ci-dessus quand le signal d'entrée au comparateur de tension mentionné ci-dessus est au dessous d'un certain niveau déterminé par un dispositif compensateur et le multivibrateur monostable ci-dessus augmente l'amplitude de la pulsion de train carré de la sortie du comparateur de tension mentionné ci-dessus en employant un circuit de réglage, une sortie du multivibrateur monostable ci-dessus qui conduit une des diodes émettant de la lumière (5), étant conforme à un pneu à pression d'air anormale.

4. L' indicateur de la pression d'air dans les pneumatiques du véhicule, selon la revendication 3 ci-dessus, caractérisé par le fait que la bonne opération de 1' indicateur ci-dessus est améliorée quand:
- une couche mince de matière non-conductrice de haute constante non-conductrice est insérée dans le premier condensateur d'air rectiligne ci-dessus (51-53) et le deuxième condensateur d'air cylindrique ci-dessus (50-52);
- les surfaces de la première, deuxième, troisième et quatrième lame métallique (50, 51, 52, 53) du premier condensateur d'air rectiligne ci-dessus (51, 53) et du deuxième condensateur d'air cylindrique ci-dessus étant l'un en face de l'autre sont enrobées d'une pâte de haute constante non-conductrice melangée avec une résine epoxy;
- la distance d'écart de couplage entre la deuxième et la quatrième lame métallique ci-dessus (51, 53) de condensateur d'air rectiligne ci-dessus et entre la première et la troisième lame métallique ci-dessus (50, 52) de condensateur d'air cylindrique ci-dessus est choisie d'être une distance minimale;
- la surface de la première, de la deuxième, de la troisième et de la quatrième lame métallique ci-dessus (50, 51, 52, 53) est choisie d'être la surface maximale permise par les dimensions du tambour de frein ci-dessus;
- un couplage de capacité de charge parasite se trouvant entre la première et la deuxième lame métallique ci-dessus (50, 51), la troisième et la quatrième lame métallique ci-dessus (52, 53), la deuxième et la troisième lame métallique ci-dessus (51, 52), la première et la quatrième lame métallique ci-dessus (50, 53) et entre la première, la deuxième, la troisième et la quatrième lame métallique ci-dessus (50, 51, 52, 53) et les parties métalliques contigues du véhicule est restreint au minimum, la minimization du couplage de capacité de charge parasite ci-dessus se réalisant quand:
la première, la deuxième, la troisième et la quatrième lame métallique ci-dessus (50, 51, 52, 53) sont arrangées à une distance permise maximale qui est choisie d'être la distance maximale des surfaces métalliques contigues du montage des roues ci-dessus permise par les dimensions du tambour de frein ci-dessus;
la première, la deuxième, la troisième et la quatrième lame métallique annulaire ci-dessus (50, 51, 52, 53) sont arrangées à la distance minimale des parties métalliques contigues du montage des roues ci-dessus;
un espacement minimal entre la première et la deuxième lame métallique ci-dessus (50, 51) et entre la troisième et la quatrième lame métallique ci-dessus (52, 53) est choisi;
la couche isolatrice ci-dessus (133) et la base isolatrice ci-dessus (134) ont une constante non-conductrice basse et une épaisseur qui est choisie d'être l'épaisseur maximale permise par les dimensions du montage des roues ci-dessus;
une épaisseur minimale de la couche isolatrice ci-dessus (133) et de la base isolatrice ci-dessus (134) est choisie de façon que la première, la deuxième, la troisième et la quatrième lame métallique annulaire ci-dessus (50, 51, 52, 53) sont arrangées à la distance maximale des parties métalliques contigues du montage des roues;
les signaux sinusoidaux de haute fréquence (126,127) sont appliqués à la troisième et la quatrième lame métallique ci-dessus (52, 53) afin que le cadre métallique entourant du montage des roues ci-dessus ne suive pas les changements rapides d'oscillation de haute fréquence;
les câbles réunissant le circuit électronique intégré ci-dessus à chaque diode émettant de la lumière (LED) ci-dessus (5) sont enrobés d'une matière isolatrice épaisse de basse constante non-conductrice.

5. Un indicateur de la pression d'air dans les pneumatiques du véhicule, selon les revendications 1-4 ci-dessus, où le circuit électronique intégré ci-dessus comprend beaucoup de diodes émettant de la lumière (5) étant conforme au nombre des roues du véhicule, afin que un seul circuit électronique intégré ci-dessus soit employé pour toutes les roues du véhicule.

6. Un indicateur de la pression d'air dans les pneumatiques du véhicule, selon la revendication 1 ou 3 ci-dessus, la jauge de pression de pneus ci-dessus (1) comprenant une paire de couches de caoutchouc résistant d'une certaine épaisseur (61) bougeant avec élasticité en réponse aux variations de la pression d'air dans le pneumatique du véhicule, caractérisée par les couches de caoutchouc résistant ci-dessus (61) contenant d'entre elles un fil d'acier mince courvé en zigzag (60), les couches de caoutchouc résistant ci-dessus renfermant hermétiquement une chambre (68), la chambre ci-dessus communiquant par un tube (69) avec l'intérieur du pneu ci-dessus , un microinterrupteur de fermeture et de repos sensible (62) étant relié électriquement à la première et la deuxième lame métallique ci-dessus (56, 57) , une électrode (63) étant installée au milieu de la paire de couches de caoutchouc résistant ci-dessus (61), l'électrode ci-dessus (63) étant reliée au fil d'acier ci-dessus (60), et une vis régulatrice (67) étendant l'électrode ci-dessus (63) verticalement vers le haut et étant employée afin de régler la position du microinterrupteur ci-dessus (62).

7. Un indicateur de la pression d'air dans les pneumatiques du véhicule, selon la revendication 6 ci-dessus, caractérisé par la jauge de pression de pneus ci-dessus (1) comprenant également à l'intérieur de la chambre ci-dessus (68) beaucoup de petites boules élastiques de caoutchouc et de la matière mousseuse (78) avec des qualités élastiques, des ressorts souples (70) qui sont arrangés en diadonale dans la chambre ci-dessus (68) afin d'augmenter l'élasticité de la matière mousseuse ci-dessus et des petites boules élastiques de caoutchouc mentionnées ci-dessus.

8. Un indicateur de la pression d'air dans les pneumatiques du véhicule, selon la revendication 1 ou 3 ci-dessus, la jauge de pression de pneus ci-dessus (1) comprenant une couche de caoutchouc résistant (81) bougeant avec élasticité en réponse aux variations de la pression d'air dans le pneumatique du véhicule, caractérisée par une chambre (88), la chambre ci-dessus (88) étant remplie de gaz comprimé et étant fermé au dessus par la couche de caoutchouc ci-dessus (81), la couche de caoutchouc ci-dessus (81) étant maintenue en position par une paire de ressorts (80) étant attachée aux murs de la jauge de pression de pneus ci-dessus (1).

9. Un indicateur de la pression d'air dans les pneumatiques du véhicule, selon les revendications 6-8 ci-dessus, la jauge de pression de pneus ci-dessus (1) étant arrangée sur une embouchure de soupage d'admission d'air (99), 1' embouchure de soupage d'admission d'air (99) ci-dessus étant placée à l'extérieur sur une couronne métallique (24) du montage des roues mentionné ci-dessus.

10. Un indicateur de la pression d'air dans les pneumatiques du véhicule, selon les revendications 6-8 ci-dessus, la jauge de pression de pneus ci-dessus (1) étant arrangée sur une embouchure de soupage d'admission d'air (99), l' embouchure de soupage d'admission d'air (99) ci-dessus étant placée à l'intérieur sur une couronne métallique (24) du montage des roues mentionné ci-dessus.

11. Un indicateur de la pression d'air dans les pneumatiques du véhicule, selon la revendication 1 ou 3 ci-dessus, étant caractérisé par la jauge de pression de pneus ci-dessus (1) comprend une électrode (93), un des bouts de l'électrode ci-dessus (93) étant fixement installé sur le mur de sousbasement et l'autre bout de l'électrode ci-dessus (93) bougeant au milieu d'une paire de points de contact (96) d'un microinterrupteur (92) en réponse aux variations de la pression d'air dans les pneumatiques du véhicule, une chambre (98) étant définie par une paire de murs pliants (91), le mur de sousbasement ci-dessus (90) et un mur de sousbasement (103).

12. Un indicateur de la pression d'air dans les pneumatiques du véhicule, selon la revendication 11 ci-dessus, caractérisé par la chambre ci-dessus (98) étant remplie de gaz lourd ayant une pression équivalente à la pression normale des pneus.

13. Un indicateur de la pression d'air dans les pneumatiques du véhicule, selon la revendication 11, où la chambre ci-dessus (98) est remplie d'air par un soupage d'admission d'air (99), le soupage d'admission d'air (99) ci-dessus étant attaché sur le mur de sousbasement (103) et faisant saillir la couronne métallique ci-dessus (24) du montage des roues mentionné ci-dessus vers l'extérieur.
